# FASCICULE DE BREVET EUROPEEN

(11) **EP 1 994 269 B1**
(45) Date de publication et mention de la délivrance du brevet: **26.08.2009**
(21) Numéro de dépôt: 06842089.2
(22) Date de dépôt: 04.12.2006
(51) Int. Cl.: F02C 7/275, F02C 7/32, F16H 57/02, F02N 11/04

(54) **INTÉGRATION D'UN MODULE DÉMARREUR/GÉNÉRATEUR DANS UNE BOÎTE DE TRANSMISSION D'UNE TURBINE À GAZ**
INTEGRATION EINES STARTER-/GENERATOR-MODULS IN EINEM GETRIEBEKASTEN EINER GASTURBINE
INTEGRATION OF A STARTER/GENERATOR MODULE IN A GAS TURBINE TRANSMISSION HOUSING

(30) Priorité: 27.02.2006 FR 0650673; 19.09.2006 FR 0653817
(43) Date de publication de la demande: 26.11.2008
(73) Titulaire: HISPANO SUIZA, 92700 Colombes (FR)
(72) Inventeur: BERENGER, Serge, F-94550 Chevilly Larue (FR); KREMER, Paul, F-78170 La Celle Saint Cloud (FR); BECQUERELLE, Samuel, F-78180 Montigny Le Bretonneux (FR); VASSAUX, Alain, F-92800 Puteaux (FR); VERCHERIN, Denis, F-91800 Boussy Saint Antoine (FR)
(74) Mandataire: Joly, Jean-Jacques
(86) Numéro de dépôt international: PCT/FR2006/051278
(87) Numéro de publication internationale: WO 2007/096493

(56) Documents cités:
- WO-A-02/099263
- US-A- 5 555 722
- US-A1- 2004 080 300
- US-B1- 6 323 625
- US-B1- 6 838 778

## Description

### Arrière-plan de l'invention

L'invention concerne les turbines à gaz et plus particulièrement le montage d'un démarreur/générateur (ou S/G, pour "Starter/Generator") sur une boîte de transmission, ou boîte de relais d'accessoires. Le domaine d'application de l'invention est celui des turbines à gaz pour moteurs aéronautiques, d'avions ou d'hélicoptères, ainsi que pour des groupes auxiliaires de puissance (ou APU, pour "Auxiliary Power Unit").

Dans une turbine à gaz, un certain nombre d'équipements, ou accessoires, sont entraînés par une transmission mécanique à partir d'une puissance mécanique prélevée sur un arbre de turbine. Cette transmission mécanique, qui comprend un ensemble de pignons logés dans un carter, est dénommée boîte de transmission ou boîte de relais d'accessoires. Les accessoires comprennent notamment diverses pompes pour la production d'énergie hydraulique, l'alimentation en carburant, la lubrification, ainsi qu'un ou plusieurs S/G électriques.

Lorsque la turbine à gaz est en fonctionnement, le ou chaque S/G fonctionne comme un générateur électrique et produit une tension électrique qui alimente un ou plusieurs centres de distribution d'énergie électrique pour l'avion ou l'hélicoptère et son ou ses moteurs.

Lorsque la turbine à gaz est à l'arrêt, un S/G peut fonctionner comme démarreur en étant alimenté par une source d'énergie extérieure afin de mettre en route la turbine à gaz par mise en rotation de l'arbre de turbine auquel la boîte de transmission est connectée.

Un S/G de type connu comprend une génératrice synchrone principale avec un rotor principal et un stator principal, et une excitatrice ayant un induit au rotor et un inducteur au stator. L'induit de l'excitatrice alimente le rotor principal de la génératrice synchrone à travers un pont redresseur à diodes tournantes. En mode génération d'énergie électrique, l'induit de la génératrice synchrone produit une tension alternative par suite de l'entraînement en rotation de l'inducteur alimenté par un courant continu délivré par le pont de diodes de l'excitatrice, la fréquence de la tension alternative produite étant variable en fonction de la vitesse de rotation. En mode démarrage, le rotor principal alimenté par l'excitatrice et le stator principal alimenté par une tension alternative à partir d'une source externe fonctionnent comme un moteur synchrone.

Un tel S/G connu est un équipement relativement volumineux qui est habituellement monté dans un carter particulier sur un côté de la boîte de transmission et qui est mécaniquement relié à celle-ci. Outre les équipements électriques, le S/G comprend un circuit de lubrification avec un réservoir de lubrifiant et une pompe entraînée par engrenages. Il en résulte un encombrement et une masse importants, d'autant que plusieurs S/G peuvent être montés sur une même boîte de transmission. De plus US 6838778 divulgue un S/G ayant les caractéristiques connues du preambule de la revendication 1. Objet et résumé de l'invention

L'invention a pour but de proposer une intégration d'un S/G dans une boîte de transmission d'une turbine à gaz qui permette une réduction importante du volume et dé l'encombrement, tout en préservant une démontabilité aisée.

Ce but est atteint grâce à un ensemble comprenant une boîte de transmission de turbine à gaz et au moins un démarreur/générateur, ou S/G, couplé mécaniquement à la boîte de transmission, ensemble dans lequel :
- la boîte de transmission comprend un train d'engrenages avec plusieurs pignons,
- le démarreur/générateur comprend une génératrice avec un rotor formant inducteur et un stator formant induit et une excitatrice avec un stator formant inducteur et un rotor formant induit relié à l'inducteur de la génératrice, et
- le rotor de la génératrice et le rotor de l'excitatrice sont montés sur un arbre commun avec un pignon engagé dans le train d'engrenages de la boîte de transmission, de part et d'autre de ce pignon.

Un tel montage apporte une économie substantielle de masse puisque l'on peut se passer d'une liaison mécanique particulière avec la boîte de transmission, ledit pignon faisant partie de la boîte de transmission lorsque l'ensemble est monté.

Par ailleurs, par rapport à un montage du S/G sur un côté de la boîte de transmission, une diminution importante de l'encombrement et un meilleur équilibrage des masses sont obtenus par la disposition de la génératrice synchrone et de l'excitatrice de part et d'autre du pignon.

En outre, la boîte de transmission et le S/G pourront partager les mêmes moyens de lubrification/refroidissement.

Avantageusement, l'induit de l'excitatrice est relié à l'inducteur de la génératrice par une liaison électrique traversant le pignon.

Avantageusement encore, l'induit de l'excitatrice étant relié à l'inducteur de la génératrice synchrone par un pont de diodes tournant formant redresseur, les diodes pourront être supportées par le pignon.

Il peut en outre être prévu un générateur à aimants permanents ayant un rotor monté sur l'arbre commun.

De préférence, le générateur à aimants permanents est monté du même côté du pignon que l'excitatrice, de manière à contribuer à un bon équilibrage des masses.

Dans un mode de réalisation, le S/G forme avec le pignon et l'arbre un module, ou module S/G, qui peut être accouplé à la boîte de transmission ou désaccouplé de celle-ci par translation.

Le désaccouplement du module S/G ou son accouplement avec la boîte de transmission peuvent être réalisés par translation parallèlement ou perpendiculairement à l'axe de l'arbre commun.

Le module S/G peut être logé dans un boîtier qui présente au moins une ouverture à travers laquelle le pignon peut être accouplé à au moins un autre pignon de la boîte de transmission.

Avantageusement, le module S/G est logé dans un boîtier qui se raccorde de façon étanche à un carter de la boîte de transmission.

Le module S/G peut être alimenté en liquide de lubrification/refroidissement à partir d'un circuit de la boîte de transmission.

Dans un autre mode de réalisation, la boîte de transmission et le S/G sont logés dans un carter commun.

Avantageusement, alors, l'ensemble formé par l'arbre avec le dit pignon et les rotors de la génératrice et de l'excitatrice peut être désaccouplé de la boîte de transmission par translation parallèlement à l'axe de l'arbre.

Dans chaque mode de réalisation, deux S/G au moins pourront être intégrés à la boîte de transmission, chaque S/G étant monté sur un arbre commun avec un pignon de la boîte de transmission.

L'invention vise aussi une turbine à gaz ayant un ensemble formé par une boîte de transmission et au moins un démarreur/ générateur, tel que défini ci-avant, ainsi qu'un moteur aéronautique ou un groupe auxiliaire de puissance équipé d'une telle turbine à gaz.

L'invention vise encore un module de démarreur/générateur ou module S/G intégrable dans une boîte de transmission de turbine à gaz, un tel module comprenant une génératrice avec un rotor formant inducteur et un stator formant induit, une excitatrice avec un stator formant inducteur et un rotor formant induit relié électriquement à l'inducteur de la génératrice, un pignon et un arbre sur lequel le rotor de la génératrice et le rotor de l'excitatrice sont montés en commun avec le pignon, de part et d'autre du pignon.

Le module S/G peut être logé dans un boîtier qui présente au moins une ouverture à travers laquelle le pignon peut être accouplé à au moins un autre pignon de boîte de transmission.

Selon une particularité du module S/G, l'induit de l'excitatrice est relié à l'inducteur de la génératrice par une liaison électrique traversant le pignon.

Selon une autre particularité du module S/G, l'induit de l'excitatrice est relié à l'inducteur de la génératrice par un pont de diodes tournant, les diodes étant supportés par le pignon.

Le module peut comprendre en outre un générateur à aimants permanents ayant un rotor monté sur l'arbre commun. Avantageusement alors, le générateur à aimants permanents est disposé du même côté du pignon que l'excitatrice.

### Brève description des dessins

L'invention sera mieux comprise à la lecture de la description faite ci-après, à titre indicatif mais non limitatif, en référence aux dessins annexés sur lesquels :
- la figure 1 est un schéma très simplifié d'un moteur à turbine à gaz ;
- la figure 2 est un schéma électrique général simplifié d'un démarreur/générateur ;
- la figure 3 est une vue montrant très schématiquement l'intégration d'un module S/G dans une boîte de transmission de turbine à gaz selon un premier mode de réalisation de l'invention ;
- la figure 4 est une vue en coupe plus détaillée du module S/G de la figure 3 ;
- les figures 5 et 6 sont des vues montrant très schématiquement l'intégration d'un module S/G dans une boîte de transmission selon une variante du premier mode de réalisation de l'invention ;
- la figure 7 est une vue en coupe plus détaillée du module S/G des figures 5 et 6 ; et
- la figure 8 est une vue montrant schématiquement intégration d'un S/G dans une boîte de transmission selon un autre mode de réalisation de l'invention.

### Description détaillée des modes de réalisation

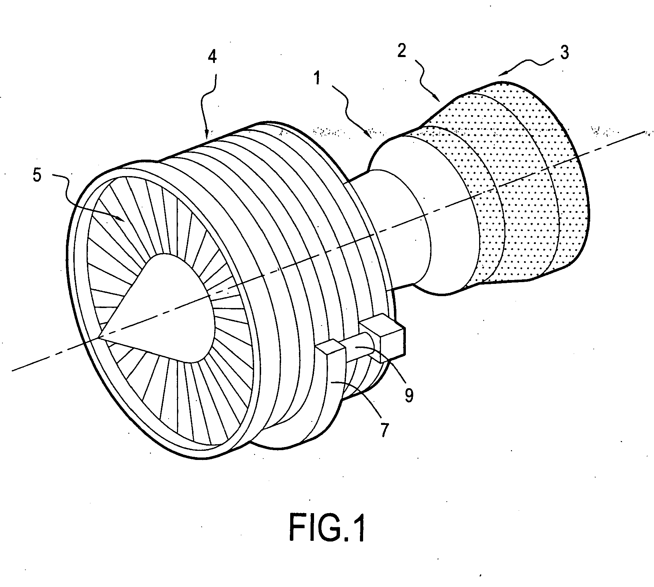

Un domaine d'application de l'invention est celui des moteurs d'avions à turbine à gaz, tel que celui représenté très schématiquement sur la figure 1, l'invention étant toutefois applicable à d'autres moteurs aéronautiques à turbine à gaz, typiquement des moteurs d'hélicoptères, ainsi qu'à des groupes auxiliaires de puissance à turbine à gaz.

Le moteur de la figure 1 comprend une chambre de combustion 1, les gaz de combustion issus de la chambre 1 entraînant une turbine haute-pression 2 et une turbine basse-pression 3. La turbine 2 est couplée par un arbre à un compresseur haute-pression 4 alimentant la chambre de combustion 1 en air sous pression tandis que la turbine 3 est couplée par un autre arbre à une soufflante 5 en entrée du moteur.

Une boîte de transmission 7, ou boîte de relais d'accessoires est reliée par une prise de puissance mécanique 9 à un arbre de turbine et comprend un ensemble de pignons pour l'entraînement de différents accessoires, dont au moins un (généralement deux) démarreur/générateur ou S/G.

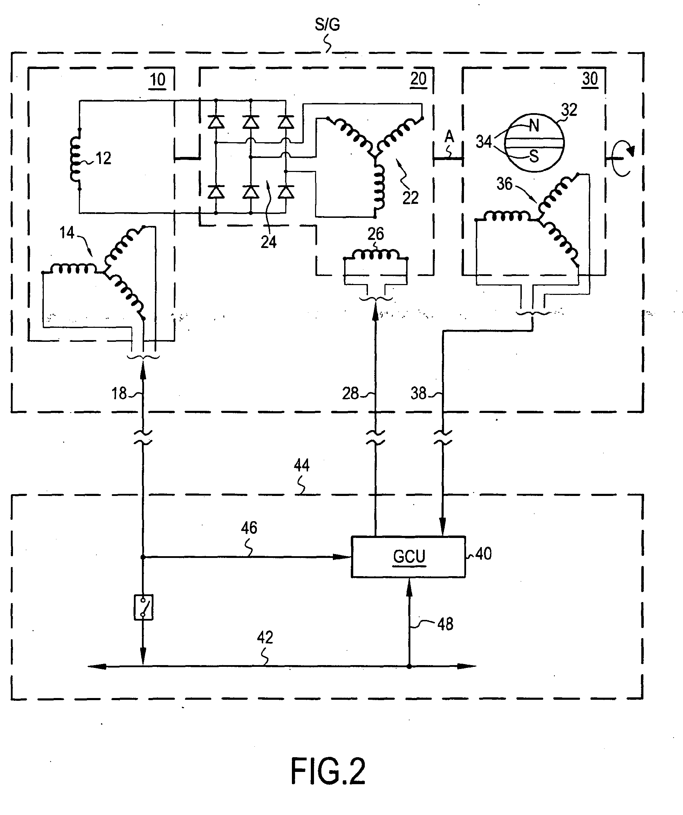

La figure 2 montre de façon simplifiée le schéma électrique général d'un S/G comprenant une génératrice synchrone 10, une excitatrice 20 et un générateur 30 à aimants permanents, ou PMG (pour "Permanent Magnet Generator") dont les parties tournantes ou rotors sont coaxiales et montées sur un même arbre rotatif d'axe A.

La génératrice synchrone 10 formant machine principale a un rotor principal formant inducteur 12 et un stator principal formant induit 14. L'excitatrice 20 a un rotor formant induit 22 auquel est relié un pont de diodes tournant 24 formant redresseur, et un stator formant inducteur 26. Le PMG 30 a un rotor 32 portant des aimants permanents 34 et un stator formant induit 36.

En mode de génération d'énergie électrique, l'inducteur 12 de la génératrice synchrone qui est relié au redresseur 24 reçoit du courant continu produit par l'excitatrice et une tension alternative est produite par l'induit 14 et est transmise par un harnais 18 sur un bus AC 42 d'un circuit de distribution d'énergie électrique tel qu'un réseau de bord 44 d'un avion ou héticoptère. Un circuit de régulation 40, ou GCU (pour "Generator Control Unit"), est alimenté par le PMG 30 via un harnais 38. Le circuit 40 reçoit par une ligne 46 une information représentative de la valeur de la tension alternative de sortie produite par la génératrice 10 et commande le courant continu fourni à l'inducteur 26 de l'excitatrice via un harnais 28 afin de réguler l'amplitude de la tension de sortie à une valeur de référence, cette tension ayant une fréquence variable en fonction de la vitesse de rotation de l'arbre A.

En mode démarreur, le circuit de régulation 40 est alimenté en tension par une ligne 48 à partir du bus AC 42 (ou d'une autre source), pour assurer son fonctionnement et pour alimenter l'inducteur 26 de l'excitatrice en courant alternatif. Dans le même temps, l'induit 14 est alimenté en courant alternatif par le harnais 18 à partir du bus AC 42 (ou d'une autre source), le fonctionnement étant alors celui d'un moteur synchrone.

Un S/G tel que décrit ci-avant, ainsi que son fonctionnement et sa régulation par un GCU, sont de type connu en soi, le PMG, l'excitatrice et la génératrice synchrone formant, en mode de génération de puissance électrique, une succession d'étages avec amplification d'un étage à l'autre. On notera que la présence du PMG n'est pas requise si le circuit de régulation 40 peut être alimenté par ailleurs. On notera aussi que les fonctions du GCU pourraient être intégrées à un circuit de régulation électronique du moteur, ou ECU (pour "Engine Control Unit").

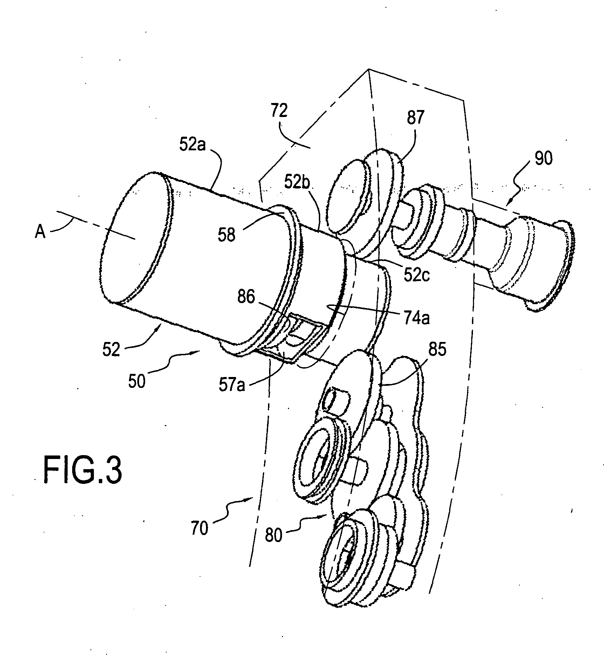

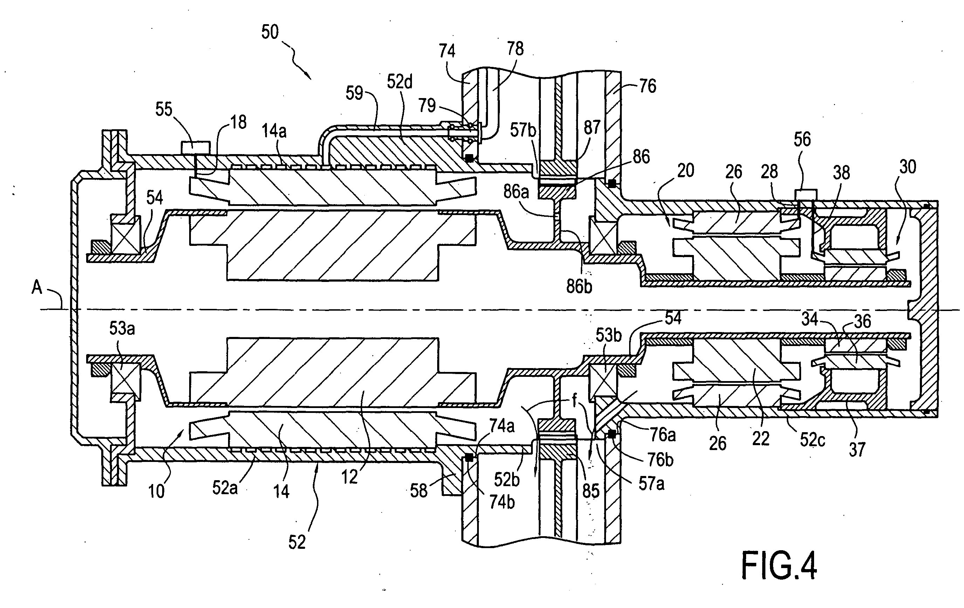

Les figures 3 et 4 illustrent un mode de réalisation d'une intégration, conformément à l'invention, d'un module S/G 50 dans une boîte de transmission d'une turbine à gaz. La boîte de transmission 70 comprend un carter 72 renfermant un train d'engrenages 80 et est couplée mécaniquement par une liaison de puissance 90 à un arbre de turbine d'une turbine à gaz, telle qu'une turbine de moteur d'avion ou de moteur d'hélicoptère ou encore d'un APU.

Le module S/G 50 comprend le S/G proprement dit qui est logé à l'intérieur d'un carter ou boîtier 52 avec un pignon 86 qui s'insère entre deux pignons 85, 87 du train d'engrenages 80 avec lesquels il engrène.

Les parties tournantes de la génératrice synchrone 10, de l'excitatrice 20 et du PMG 30 formant le S/G sont montées sur un arbre 54 en commun avec le pignon 86. La génératrice synchrone 10 est montée d'un côté du pignon 86 tandis que l'excitatrice 20 et le PMG 30 sont montés de l'autre côté, pour limiter le déséquilibre de masses entre les deux côtés du pignon 86, et, par conséquent, pour limiter le porte-à-faux du module S/G 50 sur la boîte de transmission 70.

L'arbre 54 est supporté dans le boîtier 52 par des paliers à roulements 53a 53b. L'arbre 54 peut être réalisé en une seule pièce ou en plusieurs parties alignées axialement et solidaires en rotation. Dans l'exemple illustré, le rotor de la génératrice est inséré entre deux parties tubulaires de l'arbre 54. Le pignon 86 peut être réalisé en une seule partie avec l'arbre 54 ou une partie de celui-ci, ou peut être réalisé séparément et couplé en rotation avec l'arbre 54 par une liaison à cannelures, par exemple.

Le rotor principal portant les enroulements de l'inducteur 12 de la génératrice est ainsi monté sur l'arbre 54 tandis que le stator principal portant les enroulements de l'induit 14- est fixé au boîtier 52, à l'intérieur de celui-ci. Le harnais 18 relié à l'induit 14 traverse le boîtier 52 de façon étanche pour se prolonger à l'extérieur ou être relié à un bloc de raccordement 55.

De façon similaire, le rotor de l'excitatrice 20 portant les enroulements de l'induit 22 est monté sur l'arbre 54 tandis que le stator de l'excitatrice portant les enroulements de l'inducteur 26 est fixé au boîtier 52, à l'intérieur de celui-ci. Le pont de diodes tournant formant redresseur est relié, d'une part, à l'induit 22 du côté du pignon 86 où se trouve cet induit et, d'autre part à l'inducteur 12 de la génératrice synchrone de l'autre côté du pignon 86. La liaison entre l'induit 22 et l'inducteur 12 passe à travers un passage 86a formé dans le pignon 86. Les diodes du pont tournant 24 sont avantageusement supportées par le pignon 86 en étant logés dans un ou plusieurs évidements 86b formés sur une face du pignon 86 tournée vers l'excitatrice 20 ou la génératrice 10. On assure ainsi un maintien efficace des diodes évitant leur endommagement et celui de leurs connexions par le mouvement de rotation. Le courant d'alimentation de l'inducteur 26 de l'excitatrice est amené par un harnais 28 qui se raccorde à un connecteur 56 fixé sur la surface externe du boîtier 52 en traversant celui-ci de façon étanche.

Dans l'exemple illustré, le PMG 30 est monté en bout d'arbre 54, l'excitatrice 20 étant située entre le pignon 86 et le PMG 30. Les aimants 34 du PMG sont fixés sur l'arbre 54 tandis que les enroulements de l'induit 36 du PMG situés en regard des aimants 34 sont supportés par une pièce 37 fixée au boîtier 52, à l'intérieur de celui-ci. Le courant produit par le PMG est transporté par un harnais 38 qui, comme le harnais 28, se raccorde au connecteur 56 en passant à travers le boîtier 52. Comme indiqué plus haut, le PMG pourrait être omis.

Le boîtier 52 a une forme générale cylindrique de même axe A que l'arbre 54 et comprend une partie 52a à l'intérieur de laquelle la génératrice 10 est essentiellement logée, une partie 52c à l'intérieur de laquelle l'excitatrice 20 et le PMG 30 sont logés, et une partie intermédiaire 52b raccordant les parties 52a et 52c et à l'intérieur de laquelle se trouve le pignon 86. A ses extrémités axiales, le boîtier 52 est fermé de façon étanche par des couvercles.

La paroi de la partie intermédiaire 52b présente des ouvertures ou lumières 57a 57b formées dans des zones opposées de cette paroi et à travers lesquelles le pignon 86 peut engrener avec les pignons 85 et 87. Lorsque le module 50 est intégré à la boîte de transmission (figure 4), les parties 52a_ et 52c du boîtier 52 font saillie vers l'extérieur à partir des faces externes des parois latérales opposées 74, 76 du carter 72 de la boîte de transmission 70.

Dans l'exemple des figures 3 et 4, le module 50 peut être extrait de la boîte de transmission 70, avec désaccouplement du pignon 86 par rapport aux pignons 85 et 87, ou peut être intégré à la boîte de transmission 70, avec accouplement du pignon 86 aux pignons 85 et 87, par un mouvement de translation parallèle à l'axe A. Sur la figure 3, le module 50 est représenté partiellement extrait de la boîte de transmission 70.

L'extraction (désaccouplement) du module 50 ou son intégration (accouplement) sont, dans cet exemple réalisés du côté de la paroi 74 où se trouve la partie 52a du boîtier 52. Lors du mouvement de désaccouplement ou accouplement, la partie 52c du boîtier 52 passe à travers des ouvertures circulaires coaxiales 74a 76a formées dans les parois 74 et 76 et entre les pignons 85 et 87, tandis que la partie intermédiaire 52b du boîtier 52 passe à travers l'ouverture 74a. Les dimensions respectives des parties 52b, 52c, des ouvertures 74a, 76a et de la distance entre les pignons 85, 86 sont choisies en conséquence. La partie 52a porte une bride externe 58, au voisinage de son raccordement avec la partie intermédiaire 52b, bride par laquelle le mouvement d'accouplement du boîtier est limité par venue en butée contre la paroi 74 du carter 72, cette venue en butée coïncidant avec l'accouplement du pignon 86 avec les pignons 85 et 87.

Le boîtier 52 est fixé au carter 72 par exemple par boulonnage de la bride 58 sur la paroi 74. D'autres modes de fixation pourront bien entendu être adaptés comme des modes de fixation rapide de type connu avec organes de verrouillage élastiquement déformables.

Sensiblement au niveau des raccordements entre les parties 52a et 52b et entre les parties 52b et 52c la paroi externe du boîtier s'ajuste dans les ouvertures 74a et 76a avec interposition de joints d'étanchéité respectifs 74b 76b. On réalise ainsi un montage étanche du module S/G 50 sur la boîte de transmission 70, les lumières 57a 57b s'ouvrant uniquement à l'intérieur du carter 72 lorsque le module 50 est intégré à la boîte de transmission.

Un conduit 59 d'alimentation du module S/G 50 en liquide de refroidissement et de lubrification est prévu dans un bossage 52d du boîtier 52 et s'ouvre à la surface de la bride 58 tournée vers la paroi 74 pour être raccordée à une canalisation 78 reliée au circuit de refroidissement et de lubrification de la boîte de transmission 70. La liaison étanche entre le conduit 59 et la canalisation 78 est réalisée par un raccord 79 à travers la paroi 74. Le conduit 59 est relié à un circuit 14a de refroidissement de l'induit 14 de la génératrice 10 et est en outre relié à des gicleurs (non représentés) assurant notamment la lubrification des paliers 53a, 53b et formant un brouillard d'huile à l'intérieur du boîtier 52. Le liquide de refroidissement et de lubrification est récupéré (flèches f) dans le carter 72 à travers la lumière 57a pour être remis en circulation par le circuit de refroidissement et de lubrification de la boîte de transmission. Le volume interne de la partie 52c du boîtier 52 étant isolé du reste du boîtier par le montage du palier 53b sensiblement au niveau du raccordement entre les parties 52b et 52c des passages sont formés dans le support du palier 53b pour la circulation du liquide vers la partie 52c du boîtier et hors de celle-ci.

Bien que l'on ait décrit un boîtier 52 généralement cylindrique avec des ouvertures 74a, 76a circulaires, d'autres formes du boîtier pourront être adoptées, les formes des ouvertures 74a, 76a étant choisies en conséquence.

En outre, bien que l'on ait montré l'intégration d'un seul module S/G 50, plusieurs tels modules, généralement deux, seront intégrés à la boîte de transmission 70, à différents niveaux du train d'engrenages.

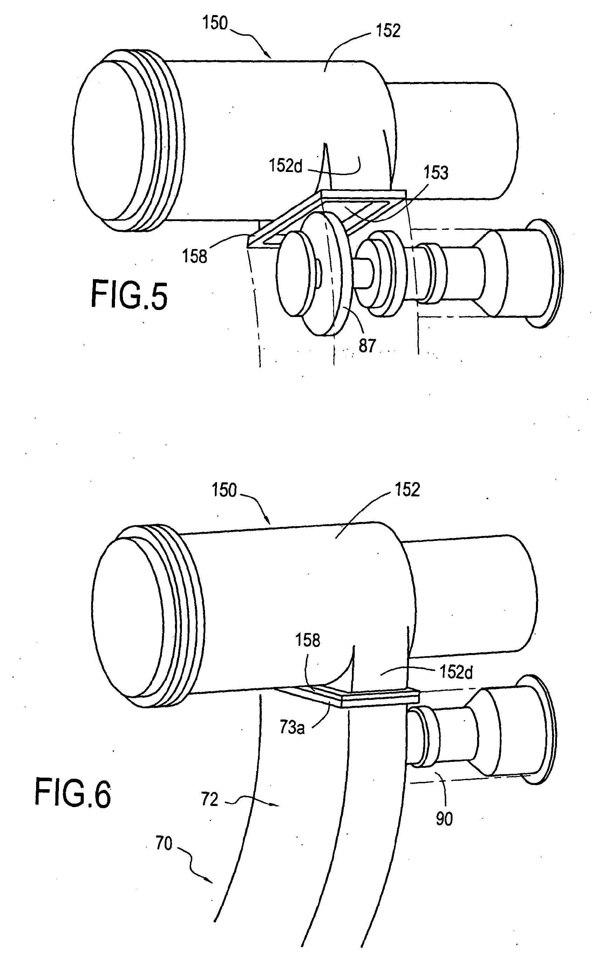

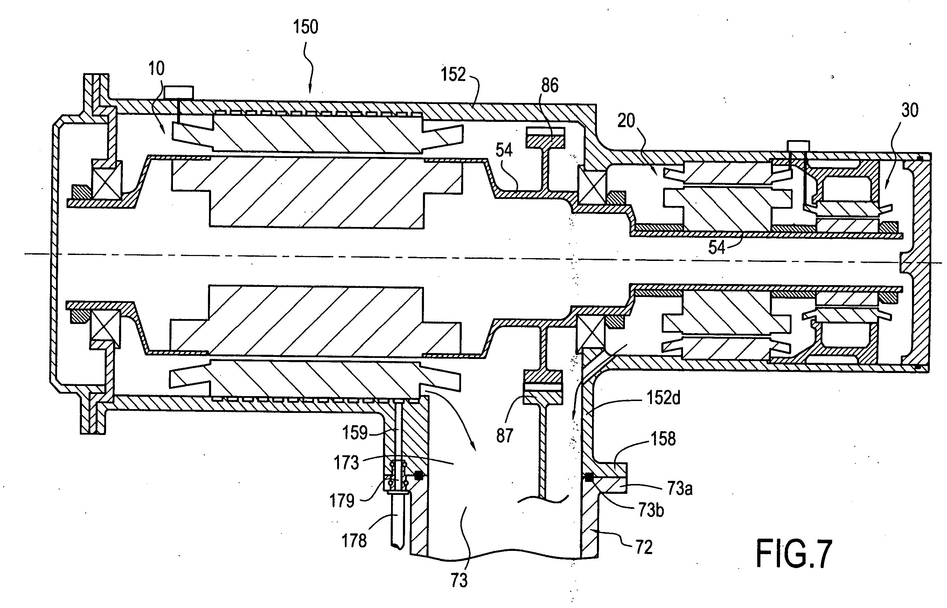

Les figures 5 à 7 illustrent une variante de réalisation d'une intégration, conformément à l'invention, d'un module S/G dans une boîte de transmission d'une turbine à gaz.

Cette variante de réalisation se distingue de celle des figures 3 et 4 essentiellement en ce que le module S/G 150 est intégré à la boîte de transmission 70 à une extrémité de celle-ci et peut être accouplé à la boîte ou désaccouplé de celle-ci, par un mouvement de translation perpendiculaire à l'axe A du module S/G.

Les éléments communs aux figures 3 et 4, d'une part, et aux figures 5 à 7, d'autre part, portent les mêmes références.

Le module S/G 150 se distingue du module S/G 50 par la réalisation du boîtier 152 du module, les autres éléments constitutifs du module 150, principalement la génératrice 10, l'excitatrice 20, le PMG 30 et le pignon 86 monté sur l'arbre commun 54 étant semblables à ceux du module 50.

Le boîtier 152 a une forme générale cylindrique et, dans sa partie centrale, présente une partie de raccordement tubulaire 152d qui est solidaire du boîtier 152 et définit une ouverture 153. L'ouverture 153 se situe dans un plan et est entourée par une bride externe 158.

Le boîtier 152 se raccorde au carter 72 de la boîte de transmission, à une extrémité de ce carter où est formée une ouverture 73, de forme correspondante à l'ouverture 153. La liaison entre le boîtier 152 et le carter 72 est réalisée par exemple par boulonnage de la bride 158 sur une bride similaire 73a du carter 72 entourant l'ouverture 73. Un joint d'étanchéité 73b entre les brides 173 et 73 permet un montage étanche du module S/G 150 sur la boîte de transmission 70. D'autres moyens de liaison pourront être utilisés, tels que des moyens de liaison rapide connus à verrouillage par éléments élastiquement déformables. Bien que l'on ait représenté des ouvertures 153 et 73 de forme rectangulaire, d'autres formes pourront être adoptées. En outre, la surface de raccordement entre le boîtier 152 et le carter 72 pourra être plane ou non.

L'intégration ou accouplement du module S/G 150 à la boîte de transmission 70 et son extraction, ou désaccouplement par rapport à la boîte de transmission se font par translation perpendiculairement à l'axe A. Le pignon 86 engrène avec un pignon 87 du train d'engrenages de la boîte de transmission à travers les ouvertures 73 et 153.

Un conduit 159 d'alimentation du module S/G 150 en liquide de refroidissement et de lubrification est prévu dans un bossage de la partie de raccordement 152d et s'ouvre à la surface de la bride 158 tournée vers la bride 73a. Le conduit 159 est raccordé à une canalisation 178 reliée au circuit de refroidissement et de lubrification de la boîte de transmission 70. La liaison entre le conduit 159 et la canalisation 178 est réalisée par un raccord 179 à travers les brides 158 et 73a.

La circulation du liquide de refroidissement et de lubrification est réalisée comme décrit plus haut à propos du module S/G 50, avec retour dans le carter 72 de la boîte de transmission à travers les ouvertures 173 et 73.

Bien que l'on ait envisagé un boîtier 152 de forme générale cylindrique, d'autres formes sont possibles, d'autant que la contrainte d'insertion du boîtier à travers des ouvertures du carter 72 et entre deux pignons du train d'engrenages de la boîte de transmission n'existe pas.

En outre, un deuxième module S/G 150 pourra être intégré à la boîte de transmission à l'autre extrémité de celle-ci. On pourrait aussi intégrer un boîtier S/G 50 et un boîtier S/G 150 dans une même boîte de transmission.

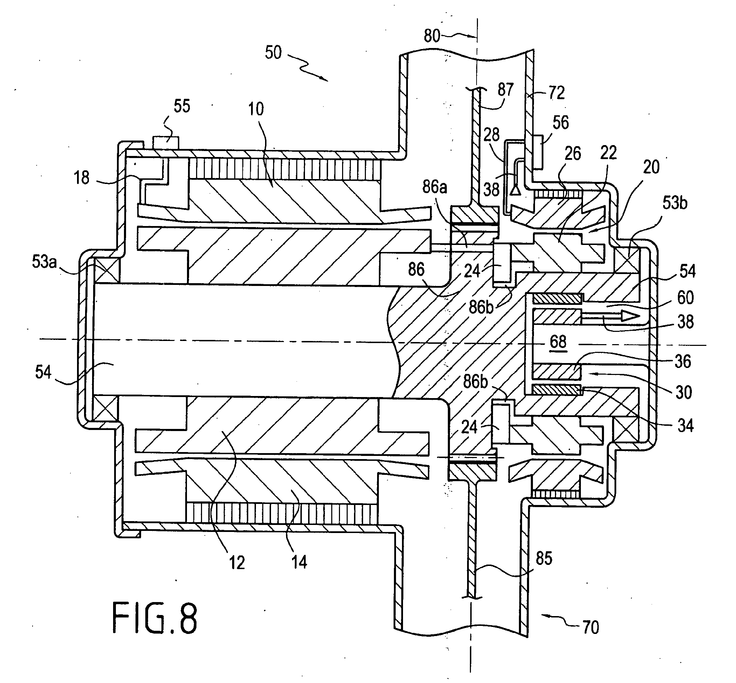

La figure 8 illustre un autre mode de réalisation d'une intégration, conformément à l'invention, d'un S/G dans une boîte de transmission d'une turbine à gaz. Des mêmes références numériques sont attribuées aux éléments communs avec ceux du mode de réalisation de la figure 4. La boîte de transmission 70 comprend un carter 72 renfermant un train d'engrenages 80 et est couplée mécaniquement à un arbre de turbine d'une turbine à gaz, telle qu'une turbine de moteur d'avion ou de moteur d'hélicoptère ou encore d'un APU.

Le S/G est intégré sur un pignon 86 du train d'engrenages 80 de la boîte de transmission, le pignon 86 s'insérant entre des pignons 85 et 87. Un S/G supplémentaire pourra être intégré de la même façon sur un autre pignon. Les parties tournantes de la génératrice synchrone 10, de l'excitatrice 20 et du PMG 30 sont montées sur un arbre 54 commun avec le pignon 86, par exemple formant une seule pièce avec celui-ci. L'arbre 54 est supporté dans le carter 72 par des paliers à roulements 53a, 53b.

La génératrice synchrone 10 est montée d'un côté du pignon 86 tandis que l'excitatrice 20 et le PMG 30 sont montés de l'autre côté.

Le rotor principal portant les enroulements de l'inducteur 12 de la génératrice est monté sur l'arbre 54 tandis que le stator principal portant les enroulements de l'induit 14 est fixé au carter 72. Le harnais 18 relié à l'induit 14 traverse le carter 72 de façon étanche pour se prolonger à l'extérieur ou être reliée à un bloc de raccordement 55.

De façon similaire, le rotor de l'excitatrice 20 portant les enroulements de l'induit 22 est monté sur l'arbre 54 tandis que le stator de l'excitatrice portant les enroulements de l'inducteur 26 est fixé au carter 72. Le pont de diodes tournant 24 formant redresseur est relié, d'une part, à l'induit 22 du côté du pignon 86 où se trouve cet induit et, d'autre part relié à l'inducteur 12 de la génératrice synchrone de l'autre côté du pignon 86 en passant à travers un passage 86a formé dans le pignon. Les diodes du pont tournant 24 sont avantageusement supportées dans des logements 86b formés sur la face du pignon 86 tournée vers l'excitatrice 20, afin d'assurer un maintien efficace des diodes évitant leur endommagement et celui de leurs connexions par le mouvement de rotation. Le courant d'alimentation de l'inducteur 26 de l'excitatrice est amené par un harnais 28 qui se raccorde à un connecteur 56 fixé sur la surface externe du carter 72 en traversant celui-ci de façon étanche.

Dans l'exemple illustré, le PMG est logé dans un évidement axial 60 formé en bout d'arbre 54. Les aimants 34 du PMG sont fixés à la surface interne cylindrique de l'évidement 60 tandis que les enroulements de l'induit 36 du PMG situés en regard des aimants sont supportés par une tige axiale 68 fixée au carter 72. Ce montage du PMG permet de réduire la dimension axiale du S/G et contribue donc à la compacité de l'ensemble, le rotor et le stator de l'excitatrice entourant le PMG. En variante, on pourra bien entendu monter le PMG de façon décalée axialement par rapport à la génératrice avec les aimants fixés à la périphérie de l'arbre 54 et entourés par l'induit du PMG fixé au carter 72. Le courant produit par l'induit 36 est transporté par un harnais 38 qui, comme le harnais 28, se raccorde au connecteur 56 en passant de façon étanche à travers le carter 72.

L'ensemble formé par l'arbre 54 avec le pignon 86, le rotor de l'excitatrice 20, le rotor du PMG 30 et le rotor principal de la génératrice synchrone 10 peut être démonté en étant extrait de la boîte de transmission par translation parallèlement à l'axe de l'arbre 54. Dans l'exemple illustré, cette extraction est réalisable à partir du côté de la génératrice synchrone 10. Il est alors souhaitable, pour faciliter cette extraction, que le diamètre externe du rotor de l'excitatrice 20 soit inférieur à la distance minimale entre les dents des pignons qui engrènent avec le pignon 86 (ou de façon sensiblement équivalente, inférieur au diamètre du pignon 86 au niveau des intervalles entre les dents). De même, il est souhaitable que le diamètre du pignon 86 au niveau du sommet des dents soit inférieur au diamètre intérieur du stator de la génératrice synchrone 10.

L'intégration du S/G dans la boîte de transmission avec un carter commun 72 selon le mode de réalisation de la figure 8 apporte non seulement une diminution d'encombrement et de masse mais permet en outre de bénéficier, pour le S/G, des moyens de refroidissement et de lubrification de la boîte de transmission, le refroidissement et la lubrification étant couramment obtenus par création, au moyen d'un ou plusieurs gicleurs, d'un brouillard d'huile à l'intérieur du carter.

L'intégration selon l'invention d'un ou plusieurs S/G dans une boîte de transmission de turbine à gaz apporte une diminution d'encombrement et de masse, permet de mutualiser des ressources pour le refroidissement et la lubrification entre le S/G et la boîte de transmission, tout en autorisant une démontabilité. Dans le mode de réalisation des figures 3 à 7, la démontabilité et le montage du module S/G étant particulièrement rapides et aisés, on préserve, dans le cas d'un moteur d'avion, la capacité de retirer un module S/G et de le remplacer par une intervention rapide sous aile de l'avion.

## Revendications

1. Ensemble comportant une boîte de transmission de turbine à gaz et au moins un démarreur/générateur couplé mécaniquement à la boîte de transmission, ensemble dans lequel :
- la boîte de transmission comprend un train d'engrenages avec plusieurs pignons,
- le démarreur/générateur comprend une génératrice avec un rotor formant inducteur et un stator formant induit et une excitatrice avec un stator formant inducteur et un rotor formant induit relié à l'inducteur de la génératrice, et **caractérisé en ce que**
- le rotor de la génératrice et le rotor de l'excitatrice sont montés sur un arbre commun avec un pignon engagé dans le train d'engrenages de la boîte de transmission, de part et d'autre de ce pignon.

2. Ensemble selon la revendication 1, dans lequel l'induit de l'excitatrice est relié à l'inducteur de la génératrice par une liaison électrique traversant ledit pignon.

3. Ensemble selon l'une quelconque des revendications 1 et 2, dans lequel l'induit de l'excitatrice est relié à l'inducteur de la génératrice par un pont de diodes tournant, les diodes étant supportées par ledit pignon.

4. Ensemble selon l'une quelconque des revendications 1 à 3, comprenant en outre un générateur à aimants permanents ayant un rotor portant des aimants permanents et un stator formant induit, le rotor du générateur à aimants permanents étant monté sur ledit arbre commun.

5. Ensemble selon la revendication 4, dans lequel le générateur à aimants permanents est disposé du même côté dudit pignon que l'excitatrice.

6. Ensemble selon l'une quelconque des revendications 1 à 5, dans lequel le démarreur/générateur forme avec ledit pignon et l'arbre un module qui peut être accouplé à la boîte de transmission ou désaccouplé de celle-ci par translation.

7. Ensemble selon la revendication 6, dans lequel l'accouplement ou désaccouplement du module sont réalisés parallèlement à l'axe de l'arbre commun.

8. Ensemble selon la revendication 6, dans lequel l'accouplement ou désaccouplement du module sont réalisés perpendiculairement à l'axe de l'arbre commun.

9. Ensemble selon l'une quelconque des revendications 6 à 8, dans lequel le module est logé dans un boîtier qui présente au moins une ouverture à travers laquelle ledit pignon peut être accouplé à au moins un autre pignons de la boîte.

10. Ensemble selon l'une quelconque des revendications 6 à 8, dans lequel le module est logé dans un boîtier qui se raccorde de façon étanche à un carter de la boîte de transmission.

11. Ensemble selon l'une quelconque des revendications 6 à 9, dans lequel le module est alimenté en liquide de lubrification/ refroidissement à partir d'un circuit de la boîte de transmission.

12. Ensemble selon l'une quelconque des revendications 1 à 5, dans lequel la boîte de transmission et le démarreur/générateur sont logés dans un carter commun.

13. Ensemble selon la revendication 12, dans lequel l'ensemble formé par l'arbre avec ledit pignon et les rotors de la génératrice et de l'excitatrice peut être désaccouplé de la boîte de transmission par translation parallèlement à l'axe de l'arbre.

14. Ensemble selon l'une quelconque des revendications 1 à 13, comportant au moins deux démarreurs/générateurs chacun monté sur un arbre commun avec un pignon de la boîte de transmission.

15. Turbine à gaz ayant une boîte de transmission couplée mécaniquement à un arbre de la turbine et au moins un démarreur/ générateur, dans laquelle la boîte de transmission et le démarreur/ générateur forment un ensemble selon l'une quelconques des revendications 1 à 14.

16. Moteur aéronautique à turbine à gaz ayant une turbine selon la revendication 15.

17. Groupe auxiliaire de puissance à turbine à gaz ayant une turbine selon la revendication 15.

18. Module de démarreur/générateur intégrable dans une boîte de transmission d'une turbine à gaz, comprenant une génératrice avec un rotor formant inducteur et un stator formant induit, une excitatrice avec un stator formant inducteur et un rotor formant induit relié à l'inducteur de la génératrice, **caracterisé en ce qu'**un pignon et un arbre sur lequel le rotor de la génératrice et le rotor de l'excitatrice sont montés en commun avec le pignon, de part et d'autre du pignon.

19. Module selon la revendication 18, le module étant logé dans un boîtier qui présente au moins une ouverture à travers laquelle ledit pignon peut être couplé à au moins un autre pignon de boîte de transmission.

20. Module selon l'une quelconque des revendications 18 et 19, dans lequel l'induit de l'excitatrice est relié à l'inducteur de la génératrice par une liaison électrique traversant ledit pignon.

21. Module selon l'une quelconque des revendications 18 à 20, dans lequel l'induit de l'excitatrice est relié à l'inducteur de la génératrice par un pont de diodes tournant, les diodes étant supportées par ledit pignon.

22. Module selon l'une quelconque des revendications 18 à 21, comprenant en outre un générateur à aimants permanents ayant un rotor monté sur l'arbre commun.

23. Module selon la revendication 22, **caractérisé en ce que** le générateur à aimants permanents est situé du même côté dudit pignon que l'excitatrice.

## Claims

1. Assembly comprising a gas turbine transmission housing and at least one starter/generator mechanically coupled to the transmission housing, an assembly in which:
- the transmission housing comprises a gear train with several gear wheels,
- the starter/generator comprises a generator with a rotor forming a field winding and a stator forming an armature and an energizer with a stator forming a field winding and a rotor forming an armature connected to the generator field winding and **characterized in that**:
- the generator rotor and energizer rotor are mounted on a common shaft with a gear wheel engaged in the transmission housing gear train, on either side of this gear wheel.

2. Assembly according to Claim 1, in which the energizer armature is connected to the generator field winding by an electrical connection passing through the said gear wheel.

3. Assembly according to either of Claims 1 and 2, in which the energizer armature is connected to the generator field winding by a rotating diode bridge, the diodes being supported by the said gear wheel.

4. Assembly according to any one of Claims 1 to 3, also comprising a permanent magnet generator having a rotor carrying permanent magnets and a stator forming an armature, the rotor of the permanent magnet generator being mounted on the said common shaft.

5. Assembly according to Claim 4, in which the permanent magnet generator is arranged on the same side of the said gear wheel as the energizer.

6. Assembly according to any one of Claims 1 to 5, in which the starter/generator forms, with the said gear wheel and the shaft, a module which can be coupled to the transmission housing or uncoupled from the latter by translational movement.

7. Assembly according to Claim 6, in which the coupling and uncoupling of the module are carried out parallel with the axis of the common shaft.

8. Assembly according to Claim 6, in which the coupling and uncoupling of the module are carried out perpendicular to the axis of the common shaft.

9. Assembly according to any one of Claims 6 to 8, in which the module is housed in a case which has at least one opening, through which the said gear wheel can be coupled to at least one other gear wheel of the housing.

10. Assembly according to any one of Claims 6 to 8, in which the module is housed in a case which is joined in a sealed manner to a casing of the transmission housing.

11. Assembly according to any one of Claims 6 to 9, in which the module is supplied with lubricating/cooling liquid from a transmission housing system.

12. Assembly according to any one of Claims 1 to 5, in which the transmission housing and the starter/generator are housed in a common casing.

13. Assembly according to Claim 12, in which the assembly formed by the shaft with the said gear wheel and the generator rotor and energizer rotor can be uncoupled from the transmission housing by translational movement parallel with the shaft axis.

14. Assembly according to any one of Claims 1 to 13, comprising at least two starters/generators, each mounted on a common shaft with a transmission housing gear wheel.

15. Gas turbine having a transmission housing mechanically coupled to a shaft of the turbine and at least one starter/generator, in which the transmission housing and the starter/generator form an assembly according to any of one Claims 1 to 14.

16. Gas turbine aeronautical engine having a turbine according to Claim 15.

17. Gas turbine auxiliary power unit having a turbine according to Claim 15.

18. Starter/generator module which can be integrated in a transmission housing of a gas turbine, comprising a generator with a rotor forming a field winding and a stator forming an armature, an energizer with a stator forming a field winding and a rotor forming an armature connected to the generator field winding, **characterized in that** it further comprises a gear wheel and a shaft on which the generator rotor and the energizer rotor are mounted in common with the gear wheel, on either side of the gear wheel.

19. Module according to Claim 18, the module being housed in a case which has at least one opening through which the said gear wheel can be coupled to at least one other transmission housing gear wheel.

20. Module according to either of Claims 18 and 19, in which the energizer armature is connected to the generator field winding by an electrical connection passing through the said gear wheel.

21. Module according to any one of Claims 18 to 20, in which the energizer armature is connected to the generator field winding by a rotating diode bridge, the diodes being supported by the said gear wheel.

22. Module according to any one of Claims 18 to 21, comprising in addition a permanent magnet generator having a rotor mounted on the common shaft.

23. Module according to Claim 22, **characterized in that** the permanent magnet generator is situated on the same side of the said gear wheel as the energizer.

## Patentansprüche

1. Einheit umfassend ein Getriebe einer Gasturbine sowie wenigstens einen Starter/Generator, der mit dem Getriebe mechanisch gekoppelt ist, Einheit, bei welcher:
- das Getriebe einen Getriebezug mit mehreren Ritzeln umfaßt,
- der Starter/Generator folgendes umfaßt, nämlich einen Generator mit einem ein Primärteil bildenden Rotor und einem ein Sekundärteil bildenden Stator, sowie eine Erregereinrichtung mit einem ein Primärteil bildenden Stator und einem ein Sekundärteil bildenden Rotor, welcher mit dem Primärteil des Generators verbunden ist, und die **dadurch gekennzeichnet ist, daß**
- der Rotor des Generators und der Rotor der Erregereinrichtung an einer gemeinsamen Welle mit einem mit dem Getriebezug des Getriebes in Eingriff befindlichen Ritzel, auf beiden Seiten dieses Ritzels angebracht sind.

2. Einheit nach Anspruch 1, wobei das Sekundärteil der Erregereinrichtung mit dem Primärteil des Generators über eine das Ritzel durchgreifende elektrische Verbindung verbunden ist.

3. Einheit nach einem der Ansprüche 1 und 2, **dadurch gekennzeichnet, daß** das Sekundärteil der Erregereinrichtung mit dem Primärteil des Generators durch eine rotierende Diodenbrücke verbunden ist, wobei die Dioden von dem Ritzel getragen werden.

4. Einheit nach einem der Ansprüche 1 bis 3, ferner umfassend einen Permanentmagnet-Generator, der einen Permanentmagneten tragenden Rotor sowie einen ein Sekundärteil bildenden Stator aufweist, wobei der Rotor des Permanentmagnet-Generators an der gemeinsamen Welle angebracht ist.

5. Einheit nach Anspruch 4, wobei der Permanentmagnet-Generator auf der gleichen Seite des Ritzels wie die Erregereinrichtung angeordnet ist.

6. Einheit nach einem der Ansprüche 1 bis 5, wobei der Starter/Generator mit dem Ritzel und der Welle ein Modul bildet, das durch Verschieben mit dem Getriebe gekoppelt oder von diesem entkoppelt werden kann.

7. Einheit nach Anspruch 6, wobei das Koppeln oder Entkoppeln des Moduls parallel zur Achse der gemeinsamen Welle vollzogen werden.

8. Einheit nach Anspruch 6, wobei das Koppeln oder Entkoppeln des Moduls senkrecht zur Achse der gemeinsamen Welle vollzogen werden.

9. Einheit nach einem der Ansprüche 6 bis 8, wobei das Modul in einem Gehäuse untergebracht ist, das wenigstens eine Öffnung aufweist, durch die hindurch das Ritzel mit wenigstens einem weiteren Ritzel des Getriebes gekoppelt werden kann.

10. Einheit nach einem der Ansprüche 6 bis 8, wobei das Modul in einem Gehäuse untergebracht ist, das dicht an ein Gehäuse des Getriebes anschließt.

11. Einheit nach einem der Ansprüche 6 bis 9, wobei das Modul von einem Kreis des Getriebes aus mit Schmier-/Kühlflüssigkeit versorgt wird.

12. Einheit nach einem der Ansprüche 1 bis 5, wobei das Getriebe und der Starter/Generator in einem gemeinsamen Gehäuse untergebracht sind.

13. Einheit nach Anspruch 12, wobei die von der Welle mit dem Ritzel und von den Rotoren des Generators und der Erregereinrichtung gebildete Einheit durch ein Verschieben parallel zur Achse der Welle von dem Getriebe entkoppelt werden kann.

14. Einheit nach einem der Ansprüche 1 bis 13, mit wenigstens zwei Startern/Generatoren, die jeweils an einer gemeinsamen Welle mit einem Ritzel des Getriebes angebracht sind.

15. Gasturbine, die ein mit einer Welle der Turbine mechanisch gekoppeltes Getriebe sowie wenigstens einen Starter/Generator aufweist, wobei das Getriebe und der Starter/Generator eine Einheit nach einem der Ansprüche 1 bis 14 bilden.

16. Gasturbinenflugtriebwerk, das eine Turbine nach Anspruch 15 aufweist.

17. Gasturbinen-Hilfstriebwerk, das eine Turbine nach Anspruch 15 aufweist.

18. Starter/Generator-Modul, das in ein Getriebe einer Gasturbine integrierbar ist, umfassend einen Generator mit einem ein Primärteil bildenden Rotor und einem ein Sekundärteil bildenden Stator, sowie eine Erregereinrichtung mit einem ein Primärteil bildenden Stator und einem ein Sekundärteil bildenden Rotor, welcher mit dem Primärteil des Generators verbunden ist, **dadurch gekennzeichnet, daß** es ferner ein Ritzel und eine Welle umfaßt, an welcher der Rotor des Generators und der Rotor der Erregereinrichtung gemeinsam mit dem Ritzel, auf beiden Seiten des Ritzels angebracht sind.

19. Modul nach Anspruch 18, wobei das Modul in einem Gehäuse untergebracht ist, das wenigstens eine Öffnung aufweist, durch die hindurch das Ritzel mit wenigstens einem weiteren Ritzel des Getriebes gekoppelt werden kann.

20. Modul nach einem der Ansprüche 18 und 19, wobei das Sekundärteil der Erregereinrichtung mit dem Primärteil des Generators durch eine das Ritzel durchgreifende elektrische Verbindung verbunden ist.

21. Modul nach einem der Ansprüche 18 bis 20, wobei das Sekundärteil der Erregereinrichtung mit dem Primärteil des Generators durch eine rotierende Diodenbrücke verbunden ist, wobei die Dioden von dem Ritzel getragen werden.

22. Modul nach einem der Ansprüche 18 bis 21, ferner umfassend einen Permanentmagnet-Generator, der einen an der gemeinsamen Welle angebrachten Rotor aufweist.

23. Modul nach Anspruch 22, **dadurch gekennzeichnet, daß** der Permanentmagnet-Generator sich auf der gleichen Seite des Ritzels wie die Erregereinrichtung befindet.
